# EUROPÄISCHE PATENTSCHRIFT

(11) **EP 2 693 161 B1**
(45) Veröffentlichungstag und Bekanntmachung des Hinweises auf die Patenterteilung: **29.11.2017**
(21) Anmeldenummer: 13003640.3
(22) Anmeldetag: 19.07.2013
(51) Int. Cl.: F41H 13/00, H01S 3/00, H01S 3/067

(54) **Strahleinrichtung für ein Laserwaffensystem**
Beam device for a laser weapon system
Dispositif de rayonnement d'un système d'arme laser

(30) Priorität: 31.07.2012 DE 102012015074
(43) Veröffentlichungstag der Anmeldung: 05.02.2014
(73) Patentinhaber: MBDA Deutschland GmbH, 86529 Schrobenhausen (DE)
(72) Erfinder: Hagen, Thomas, D-85296 Rohrbach/Ilm (DE)
(74) Vertreter: LKGLOBAL Lorenz & Kopf PartG mbB Patentanwälte

(56) Entgegenhaltungen:
- WO-A2-2006/103655
- US-A- 5 208 699
- US-A1- 2004 075 884

## Beschreibung

Die vorliegende Erfindung betrifft Laserwaffensysteme. Insbesondere betrifft die vorliegende Erfindung eine Strahlrichteinheit für ein Laserwaffensystem mit hoher Bewegungsdynamik bei gleichzeitig hoher Ausgangsleistung. Weiter insbesondere betrifft die vorliegende Erfindung einen Aufbau einer Strahlrichteinheit eines Laserwaffensystems auf der Grundlage von mit elektrischer Energie betriebenen, diodengepumpten Lasern.

Bekannt sind Laserwaffensysteme, welche Laserquellen sowie zugehörige Optiken aufweisen, die es ermöglichen, Laserwaffensysteme gegen verschiedene Klassen von Zielen einzusetzen. Mögliche Einsatzszenarien stellen beispielsweise den Selbstschutz von Plattformen oder aber der offensive Einsatz dar. Gemein ist beiden Einsatzszenarien die Verwendung von Hochenergielasern.

Derartige Laserwaffensysteme können gegen statische Ziele wie beispielsweise Minen, Sperren oder behelfsmäßige Spreng- und Brandvorrichtungen (Improvised Explosive Devices - IED), aber auch gegen dynamische Ziele, speziell im Rahmen der Abwehr von Bedrohungen durch fliegende Objekte wie Raketen, Artillerie und Granatwerfer (Rocket, Artillerie, Mortar - RAM), gegen Lenkflugkörper mit und ohne Suchkopf oder auch gegen Drohnen bzw. unbemannte Luftfahrzeuge (Unmanned Areal Vehicle - UAV) Verwendung finden.

Zur Bekämpfung derartiger Ziele werden herkömmlich optische Strahlungsleistungen verwendet, die deutlich in den Bereich oberhalb von 100 kW optischer Ausgangsleistung reichen.

Naturgemäß tritt eine mögliche Bedrohung regelmäßig ohne Vorwarnung und aus zuvor nicht bekannter Richtung auf und erfordert für deren wirksame Bekämpfung eine geeignete Ausrichtung eines Laserwaffensystems innerhalb von wenigen Sekunden bis zu Bruchteilen von Sekunden.

Operationelle Laserwaffensysteme erfordern daher eine Ausgestaltung, die es ermöglicht, eine Bekämpfung von Zielen und somit eine Ausrichtung eines Wirkstrahls, somit die vom System ausgesandte Laserstrahlung, innerhalb eines ganzen Halbraumes (Hemisphäre) um das Laserwaffensystem herum zu ermöglichen. Wichtig ist hierbei, dass die Ausrichtung und eine sich möglicherweise daran anschließende Verfolgung eines Zieles sowohl eine hohe räumliche Bewegungsdynamik als auch Präzision erfordern mag.

Der Fall, dass eine Bekämpfung von Zielen auch in Überflugszenarien (die Bedrohung überfliegt das Laserwaffensystem) möglich sein soll, stellt besondere Anforderungen an ein Laserwaffensystem, da insbesondere im Bereich des Zenits Probleme in Form von extrem hohen Richtgeschwindigkeiten und Beschleunigungen auftreten können, welche insbesondere dann relevant sind, wenn ein Überkippen, also eine vollständige Halbraumbewegung des Strahlrichtsystems, nicht möglich ist.

Eine mögliche Realisierung eines Laserwaffensystems ist die Verwendung eines Faserlasers als Laserstrahlquelle. Hierbei erfolgt die Übertragung der optischen Strahlungsleistung zwischen Laserstrahlquelle und Strahlsender jeweils über nachgeschleppte Faserlichtleiter. Faserlichtleiter sind jedoch möglicherweise bei den dabei auftretenden optischen Strahlleistungen und Strahlqualitäten in der möglichen Länge und auch in den realisierbaren Biegeradien beschränkt, da bei größeren Längen nicht lineare Effekte, wie beispielsweise stimulierte Ramanstreuung oder auch thermische Effekte auftreten können, welche die übertragbare Leistung begrenzen können. Eine Vergrößerung des Faserdurchmessers wiederum kann zu einer Verschlechterung der Strahlqualität führen.

Die Eignung einer Laserquelle für ein Laserwaffensystem bestimmt sich meist im Wesentlichen durch die Modenqualität bzw. Strahldivergenz, den spektralen Eigenschaften sowie der optischen Leistung der Laserquelle. Zur Realisierung eines Laserwaffensystems von beispielsweise 10 kW optischer Leistung wird die frei verfügbare Faserlänge regelmäßig unter 2,5 m gehalten. Eine solche geringe freie Länge ermöglicht jedoch regelmäßig nicht ein Laserwaffensystem zu implementieren, das nach dem Konzept des nachgeschleppten Faserlichtleiters funktioniert und dabei gleichzeitig eine Beweglichkeit über große Teile des Raumwinkels, insbesondere einen Halbraum, realisiert.

Ein Laserwaffensystem weist meist, unabhängig von der Art der Ausführung des eigentlichen laseraktiven Mediums, beispielsweise als Stab-, Slap-, Faser- oder Scheibenlaser, einen diodengepumpten Festkörperlaser auf. Realisierbar ist ein Laserwaffensystem jedoch gleichfalls unter Verwendung von Flüssigkeits-, Gas-oder Metalldampflaser, das heißt, die Umwandlung der primären Energie, z.B. in Form elektrischer Energie, in Strahlungsenergie zur optischen Anregung des laseraktiven Mediums verwendet eine signifikante Anzahl von Halbleiterlasern bzw. Diodenlasern.

Ein Laserwaffensystem benötigt über die Strahlerzeugung hinaus eine Vielzahl von funktionalen Elementen wie Stromversorgung, Pufferung, Kühlung, mechanische Struktur, optische Elemente, Sensorik und Aktorik.

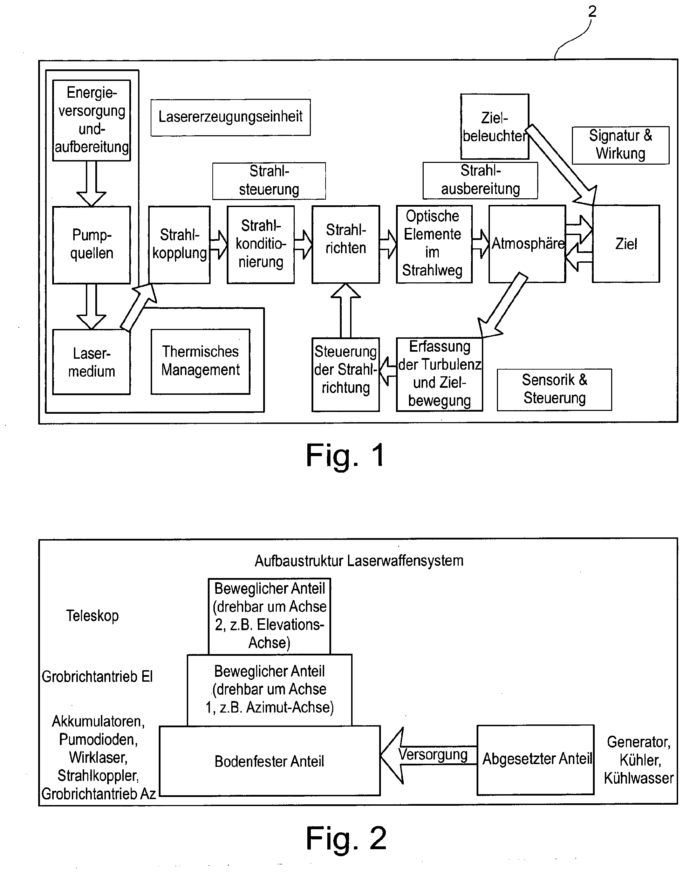

Eine generische Architektur der funktionalen Komponenten eines Laserwaffensystems ist in Figur 1 dargestellt.

Eine Energieversorgung und Aufbereitung wirkt hierbei auf die Pumpquellen, welche unter Verwendung des Lasermediums einen Wirkstrahl erzeugen, der nachfolgend in die Strahlsteuerungseinheit eingegeben wird. Die Strahlsteuerungseinheit besteht exemplarisch aus einer Strahl(ein)kopplung mit nachfolgender Strahlkonditionierung sowie Elementen, um eine Ausrichtung des Strahls, beispielsweise auf ein Ziel, zu ermöglichen. Der Wirkstrahl breitet sich danach über mögliche optische Elemente im Strahlweg und regelmäßig durch die Erdatmosphäre in Richtung Ziel aus, welches von einem Zielbeleuchter markiert sein kann. Auf dem Ziel wird eine Wirkung durch den Strahl hervorgerufen. Sensorik und Steuerelektronik können z.B. Turbulenzen der Atmosphäre sowie eine Zielbewegungen erfassen und unter Verwendung einer geeigneten Steuerung den Wirkstrahl nachführen bzw. nachrichten.

Eine derartige Vielzahl an funktionalen Elementen und den zu deren Betrieb erforderlichen Hilfseinrichtungen summiert sich zu einem signifikanten Gewicht, bei einem Laserwaffensystem der Leistungsklasse von 100 kW mag dies mehrere Tonnen betragen. Eine Reduktion der Leistungsgewichte von unter 50 kg je kW ist hierbei zukünftig auch unwahrscheinlich.

Insbesondere bei Hochenergielaserwaffensystemen scheidet somit die naheliegende Möglichkeit der Vermeidung eines nachgeschleppten Faserlichtleiters, nämlich die Realisierung eines Aufbau mit einer starren Kopplung von Laserstrahlquelle und Strahlsender im Ganzen, aufgrund der daraus resultierenden signifikanten zu bewegenden Masse und der hierdurch letztendlich realisierbaren Richtdynamik und Genauigkeit aus.

Eine mögliche alternative Realisierung eines Laserwaffensystems basiert auf dem Konzept einer Trennung des Laserwaffensystems in einen statischen Teil (Strahlerzeugung nebst Nebenaggregaten sowie Plattform) und einem beweglichen, dem Ziel nachgeführten Teil (insbesondere dem Strahlsender). Im statischen Anteil sind dabei bevorzugt alle masse- bzw. volumenbehafteten Elemente anzuordnen, um den beweglichen, dem Ziel nachzuführenden Anteil so leicht und agil wie möglich zu halten.

Figur 2 zeigt eine derartige Aufteilung der funktionalen Komponenten in einen abgesetzten Teil, einen bodenfesten Teil sowie zwei im Wesentlichen voneinander getrennte Antriebsteile. Der abgesetzte Teil kann hierbei aus einem Generator zur Erzeugung der benötigten Energie sowie dessen funktionale Elemente wie Kühlung und Kühlwasserzufuhr bestehen. Die erzeugte Energie wird über eine Versorgung zum bodenfesten Anteil geleitet, in welchem die Lasererzeugungseinheit angeordnet ist. Der erzeugte Wirkstrahl wird im Weiteren in einem zweigeteilten beweglichen Anteil auf zum Beispiel ein Ziel ausgerichtet. Der bewegliche Anteil kann hierbei in einen Grobantrieb, welcher zunächst um eine Achse, zum Beispiel die Azimut-Achse, drehbar ist, und in einen zweiten Anteil mit einer zweiten Achse, zum Beispiel die Elevationsachse, aufgeteilt werden.

In einem System gemäß Figur 2 mag es sich jedoch ergeben, dass der von der/den Laserstrahlquelle(n) erzeugte Wirkstrahl über zwei in großen Winkelbereichen bewegliche Achsen zum Strahlsender, zum Beispiel ausgebildet als Teleskop, geführt werden muss. Eine mögliche Art der Entkopplung von Drehbewegungen zwischen verschiedenen, gegeneinander bewegten Teilen eines Strahlrichtsystems und für eine Übertragung der optischen Strahlungsleistung von einem Teil zum nächsten wären prinzipiell monolithischen Drehübertrager/Kupplungen für Lichtleiter. In den für ein Laserwaffensystem interessierenden Strahlleistungs- und Strahlqualitätskategorien sind diese jedoch noch nicht realisierbar. Dies gilt insbesondere dann, wenn im Sinne eines Konzeptes zur Leistungssteigerung durch Strahlkopplung mehrere unabhängige Strahlen zu einer an den Strahlsender angeflanschten Strahlkoppeleinheit übertragen werden sollen.

Eine mögliche Realisierung einer geeigneten Übertragung ist eine Freistrahlübertragung zwischen Laserstrahlquelle und Strahlsender, welche regelmäßig derart realisiert werden, dass Bewegungsachsen bzw. Drehachsen eines Strahlrichtsystems zumindest abschnittsweise mit der Längserstreckungsrichtung einer Freistrahl-Teilübertragung zusammenfallen. Hierzu existieren bekannte astronomischer Teleskope, wobei dort die Strahlführung jedoch in umgekehrter Richtung realisiert ist, das heißt von außen durch das Teleskop zu einem Sensor oder Messinstrument erfolgt. Ein solches Prinzip ist bekannt als Coude-Fokus oder (für eine Achse) als Nasmyth-Fokus.

Da jedoch in astronomischen Teleskopen die Randbedingungen übertragbarer Lichtleistungen (im Bereich von Nanowatt) im Vergleich zu mehreren 100 kW bei Laserwaffensystemen sowie die erforderliche Richtgenauigkeit und notwendige kinematische Dynamik derart signifikant unterschiedlich sind, was gleichzeitig erhebliche Auswirkungen auf die Auslegung der optischen Elemente, die mechanische Konstruktion sowie den notwendigen Richtantrieb nebst Sensorik und Regelung nach sich zieht, stellen astronomische Teleskope keine geeignete Plattform für die Entwicklung eines Laserwaffensystems dar.

DE 10 2010 051 097 A1 beschreibt eine Vorrichtung zur Schaffung eines Lasers, der sich aus zwei oder mehreren Einzellasern ergibt, die jeweils einen Einzelstrahl erzeugen. Diese Einzelstrahlen der Einzellaser werden auf ein Ziel projiziert und an diesem geometrisch überlagert, sodass sie in Summe die gewünschte Leistung am Ziel realisieren. Auf Grundlage dieser Vorrichtung wird des Weiteren ein Waffensystem aufgezeigt, das neben wenigstens einer Feuerleitung, wenigstens einem Radar und wenigstens einer Be- bzw. Auswerteeinheit zwei oder mehrere Waffenlaser aufweist, die voneinander auch beabstandet sein können.

DE 10 2012 000 672 A1 beschreibt einen Aufbau zur Energieversorgung eines Laserwaffensystems auf der Grundlage von mit elektrischer Energie betriebenen diodengepumpten Lasern. Hierbei ist der Aufbau so gestaltet, dass die Betriebseigenschaften der zum optischen Pumpen verwendeten Vielzahl von Halbleiterlaserelementen ("Laserdioden") unter den beim typischen Betrieb eines Laserwaffensystems auftretenden Randbedingungen bezüglich Stromaufnahme und Spannungsaufnahme in optimaler Weise an eine elektrische Primärenergieversorgung angepasst werden, und nachteilige Effekte wie hohe elektrische Verluste, unerwünschte elektromagnetische Störabstrahlungen und magnetische Kräfte so weit als möglich vermieden, sowie weiter die Betriebszuverlässigkeit so weit als möglich gesteigert wird

EP 2 182 596 A1 beschreibt einen taktischen Strahler für gerichtete Energie mit zumindest zwei Erzeugern hochenergetischer gerichteter Strahlen, zumindest einer Strahlenkombinations-einrichtung, die die von den Erzeugern ausgesandten hochenergetischen gerichteten Strahlen zu einem kombinierten Hochenergiestrahl zusammenführt und einer Fokussierungseinrichtung für den kombinierten Hochenergiestrahl.

US 2004/0075884 A1 beschreibt ein Lasersystem mit einem ersten Subsystem und einem zweiten Subsystem. Das erste Subsystem ist auf einer ersten Plattform und das zweite Subsystem auf einer zweiten Plattform angeordnet, wobei die beiden Plattformen räumlich voneinander getrennt und relativ zueinander beweglich sind. Zwischen den beiden Plattformen ist Energie übertragbar, so dass von der beweglichen Plattform aus ein Laserstrahl erzeugt und auf ein Ziel gerichtet werden kann.

Die vorliegende Erfindung betrifft nun ein Laserwaffensystem mit neuartiger Anbindung von Lasererzeugungselement und Strahloptikelement dergestalt, dass eine hohe räumliche Dynamik und Präzision der Ausrichtung eines Wirkstrahls realisierbar ist, ohne gleichzeitig eine Verschlechterung der Eigenschaften des Wirkstrahls in der Übertragung zum Strahloptikelement in Kauf nehmen zu müssen.

Demgemäß wird eine Strahlrichteinheit für ein Laserwaffensystem sowie ein solches Laserwaffensystem gemäß den unabhängigen Ansprüchen angezeigt. Bevorzugte Ausgestaltungen ergeben sich aus den abhängigen Ansprüchen.

Insbesondere realisierbar sind im Rahmen der vorliegenden Erfindung Richtgeschwindigkeiten von >= 1 rad/s, Richtbeschleunigungen von >= 1 rad/s² sowie einer Richtgenauigkeit von >= 5 µrad.

Erfindungsgemäß wird daher vorgeschlagen, die Strahlübertragung zu einem Strahlrichtsystem eines Laserwaffensystems derart auszugestalten, dass ein Ausgangsstufenelement, welches am Ende der Verstärkungskette einer Laserquelle steht und abschließend die Modenqualität bzw. Strahldivergenz, spektralen Eigenschaften und insbesondere optische Leistung der von der Laserquelle abgegebenen Strahlung bestimmt, von den übrigen Lasererzeugungskomponenten abgetrennt bzw. abgesetzt und auf dem zur Richteinheit bzw. Strahloptikelement des Laserwaffensystems gehörenden voll beweglichen Anteil des Richtsystems angeordnet wird.

Hierbei ist der Aufbau derart ausgestaltet, dass ein System entsteht, bei dem der letztendlich auf ein Ziel gerichtete Wirkstrahl im vollen das Laserwaffensystem umgebenden Halbraum richtbar ist, wobei die Leistungsübertragung zwischen den Elementen, in welchen die Energiewandlung von einer Energieform in optische Strahlungsenergie erfolgt, und dem abschließenden, optomechanischen, für die Strahlrichtung auf das Ziel verantwortlichen Element dergestalt erfolgt, dass diese über eine faseroptische Anbindung bzw. faseroptische Elemente an ein Ausgangsstufenelement erfolgt und an dem Anteil des Laserwaffensystems, welches zur Zielerfassung bzw. Zielnachführung eingerichtet ist, angeordnet ist. Hierbei erfolgt insbesondere die Übertragung der optischen Energie über zumindest eine bewegliche Achse und dabei nicht über eine Freistrahlführung.

Das erfindungsgemäße Prinzip wird insbesondere dadurch erreicht, dass die Strahlquelle dergestalt funktional geteilt wird, dass unter Berücksichtigung von Volumen und Masse eine Trennung der Komponenten der Strahlquellen erfolgt in solche, welche einerseits die Modenqualität bzw. Strahldivergenz sowie die spektralen Eigenschaften und andererseits die optische Leistung maßgeblich bestimmen.

Insbesondere wird eine die Ausgangsstrahlqualität maßgeblich bestimmende, aber nur für einen Bruchteil des Gesamtvolumens und der Gesamtmasse einer Strahlungsquelle verantwortliches Ausgangsstufenelement unmittelbar an den beweglichen Teil der Strahlrichteinheit angekoppelt und dabei bei jedem Richtvorgang mit dieser bewegt, während das Ausgangsstufenelement über faseroptische Elemente mit optischer Strahlungsleistung versorgt wird, welche in den, zusammen mit den zugehörigen Nebenaggregaten wie Energieversorgung, Kühlung etc., für den Großteil des Gesmtvolumens und der Gesamtmasse einer Strahlquelle maßgeblichen Pumpquellen erzeugt wird, wobei diese in einem bodenfesten bzw. höchstens teilbeweglichen Anteil des Systems angeordnet sind. Die Übertragung der Leistung und der optischen Signale zwischen den beiden Anteilen des stationären/teilbeweglichen Anteils und des vollbeweglichen Anteils erfolgt über faseroptische Elemente, die jedoch entweder nicht die gleiche optische Qualität bzw. Leistungskapazität aufweisen müssen wie beispielweise die Anbindung von Ausgangsstufenelement und Strahloptikelement.

Hierdurch wird erzielt, dass die Vorteile einer faseroptischen Leistungsübertragung gegenüber einer Freistrahlübertragung wie zum Beispiel Robustheit, Justageunabhängigkeit, Unempfindlichkeit gegen schädliche Umwelteinflüsse, flexible geometrische Gestaltung und geringes Volumen und Masse beibehalten werden können, ohne den verfügbaren Richtbereich (Hemisphäre) wesentlich einzuschränken, die insgesamt auf einen beweglichen Anteil eines Strahlrichtsystems zu bewegenden Volumina und Massen unnötig über das nötige Maß zu erhöhen und dabei wesentliche Abstriche bei der Modenqualität bzw. Strahldivergenz, den spektralen Eigenschaften sowie der optischen Leistung und damit der auf einem Ziel verfügbaren (spektralen) Bestrahlungsstärke eingehen zu müssen. Auch die Betriebszuverlässigkeit wird gleichzeitig gesteigert.

Als vollbeweglicher Anteil des Laserwaffensystems ist hierbei insbesondere derjenige Teil zu verstehen, der im Halbraum zur Zielerfassung bzw. Zielnachführung frei bewegbar eingerichtet ist. Ein teilbeweglicher Anteil bzw. stationärer Anteil kann beispielsweise auf einer Transportplattform angeordnet sein, um das gesamte Laserwaffensystem zwischen verschiedenen Einsatzgebieten bzw. Einsatzorten transportabel zu halten, ohne dass diese Bewegung Einfluss auf den eigentlichen Einsatz des Laserwaffensystems in Bezug auf Zielerfassung und Zielnachführung nimmt.

Ein erfindungsgemäßes Ausgangsstufenelement kann dabei insbesondere als ein Faserlaser ausgebildet sein, wobei das Ausgangsstufenelement entweder wiederum mit einem Faserausgang, jedoch signifikant kürzerer Länge als benötigt werden würde, wenn das Ausgangsstufenelement nicht auf dem vollbeweglichen Teil angeordnet wäre, einer sogenannten vollbeweglichen Faserlänge oder bereits als ein Freistrahl ausgebildet sein. In beiden Fällen endet die fasergeführte Strecke der Signalübertragung erst in dem vollbeweglichen Teil der zum Laserwaffensystem gehörenden Richteinheit. Eine fasergebundene Anbindung an das Ausgangsstufenelement ist somit weiterhin notwendig, da jedoch die funktionale Ausgestaltung des Ausgangsstufenelementes auf dem vollbeweglichen Anteil des Laserwaffensystems eingerichtet ist, kann diese Faserübertragung anders ausgestaltet sein, insbesondere muss nicht die herkömmlich benötigten hohen Leistungen bzw. hohe Strahlqualität verlustfrei übertragen können.

Auch kann das Ausgangsstufenelement als eine optische gepumpte Laserquelle ausgebildet sein, bei welchem das Medium als Stab-, Slap- oder Scheibenlaser oder einer Anzahl oder Kombination solcher Geometrien ausgebildet ist. Die Anbindung des Ausgangsstufenelementes an eine Strahlrichteinheit kann optische Faser oder als ein Freistrahl ausgebildet sein. Eine erfindungsgemäße Ausgangsstufe muss dabei nicht notwendigerweise eine Erhöhung der optischen Ausgangsleistung einer Laserquelle bereitstellen, somit eine Leistungsverstärkung von deutlich größer als 1 aufweisen. Vielmehr kann ein erfindungsgemäßes Ausgangsstufenelement weitgehend passiv, somit nichtverstärkend, ausgebildet sein und insbesondere eine während der Übertragung von den vorgelagerten Stufen auftretende Verschlechterung der Strahleigenschaften hinsichtlich Modenqualität bzw. Strahldivergenz bzw. spektralen oder zeitabhängigen Eigenschaften des Strahls kompensieren bzw. den Ausgangsstrahl vergüten.

Das erfindungsgemäße Konzept ist hierbei nicht auf die Verwendung einer einzelnen Strahlenquelle beschränkt, vielmehr lässt es sich auch auf das Prinzip der Strahlkopplung mehrerer Laserquellen übertragen. In einem solchen Fall können mehrere Ausgangsstufenelemente der jeweiligen einzelnen Laserstrahlquelle zur Anwendung kommen, welche sich in äquivalenter Weise an einem nachfolgenden, sich ebenfalls auf dem vollbeweglichen Teil des Strahlrichtsystems befindlichen Strahlkoppler anbinden.

Erfindungsgemäß ergibt sich somit ein im Vollen Halbraum richtbares Laserwaffensystem, bei dem vermieden wird, dass durch eine für eine Strahlübertragung der Ausgangsleistung des Lasersystems mit einem nachgeschleppten Faserlichtleiter notwendige Faserlänge die Eigenschaften des Wirkstrahls nachteilig beeinflusst wird. Auch wird die Verwendung eines Freistrahls hoher Leistung über Drehachsen vermieden, dessen Führung hohe Genauigkeitsanforderungen an die verwendeten Komponenten sowie an die eine oder mehrere relativ zueinander und zu einem ortsfesten Bezugssystem bewegte Achsen stellt und gleichzeitig vermeidet, dass die zur Erzeugung des Laserstrahls benötigten Laserquellen des Lasersystems oder zumindest deren besonders voluminöse bzw. massereiche Anteile wie Pumpquellen, Energieversorgung, Speicherung und Kühlung während eines Richtvorganges mit dem vollbeweglichen Anteil der Strahlrichteinheit mitbewegt werden müssen.

Weiterhin ergibt sich durch die erfindungsgemäße Lösung eine erhöhte Zuverlässigkeit und Einsatzbereitschaft eines Laserwaffengesamtsystems, da sich durch den erfindungsgemäßen Aufbau die Anzahl der an der Strahlführung beteiligten Elemente signifikant verringert und sich im Wesentlichen, insbesondere im beweglichen Teil, auf monolithische Faserelemente beschränken lässt. Auch ergibt sich, zum Beispiel im Falle der Strahlkopplung, dass ein Ausfall eines einzelnen Stranges sich nicht mehr katastrophal auf die Funktion des Gesamtsystems auswirken kann.

Weitere Ausführungsbeispiele und Vorteile der vorliegenden Erfindung ergeben sich aus der nachfolgenden Figurenbeschreibung. In verschiedenen Figuren werden gleiche oder ähnliche Elemente mit gleichen oder ähnlichen Bezugszeichen versehen.

Die Darstellung in den Figuren ist schematisch und nicht maßstäblich, mag jedoch qualitative Größenverhältnisse wiedergeben.

Es zeigen
- Figur 1: eine generische Architektur einer Wirkkomponente eines Laserwaffensystems;
- Figur 2: eine Zuordnung funktionaler Komponenten eines Laserwaffensystems;
- Figur 3: eine exemplarische Ausgestaltung eines Laserwaffensystems gemäß der vorliegenden Erfindung;
- Figur 4: eine exemplarische Ausgestaltung eines Faserlasers gemäß der vorliegenden Erfindung; und
- Figur 5: eine weitere exemplarische Ausgestaltung eines Laserwaffensystems gemäß der vorliegenden Erfindung.

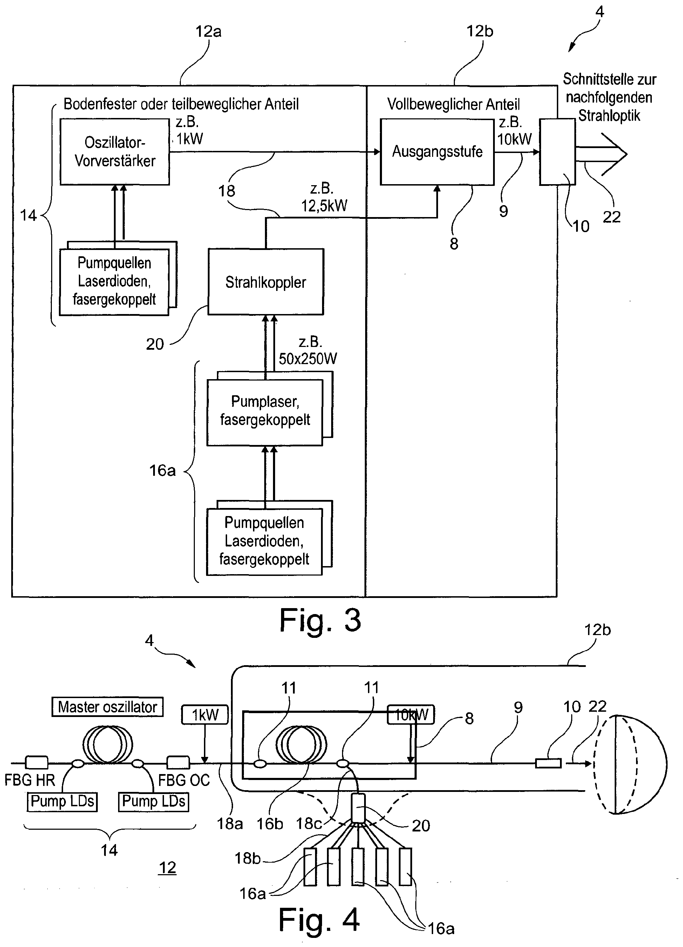

Figur 3 zeigt eine exemplarische Aufbaustruktur eines erfindungsgemäßen Laserwaffensystems mit ausgelagertem Ausgangsstufenelement 8.

Die Strahlrichteinheit 4 des Laserwaffensystems weist hierbei einen bodenfesten bzw. teilbeweglichen Anteil 12a sowie einen im Wesentlichen vollbeweglichen Anteil 12b auf. Der vollbewegliche Anteil 12b ist hierbei zur Zielerfassung bzw. Zielnachführung des Wirkstrahls eingerichtet und kann sich erfindungsgemäß im Wesentlichen über einem Halbraum, somit einer Halbkugel aufsetzend auf die Erdoberfläche im Standort des Laserwaffensystems, erstrecken.

Die Lasergenerierung des Laserwaffensystems 2 gemäß Figur 3 basiert hierbei auf einem Faserlaser. Dieser weist einen ersten Lasererzeugungsanteil oder eine Seedlasereinheit 14 auf, welche über einen Faserleiter 18 an das Ausgangsstufenelement 8 angebunden ist. Im Weiteren weist der Faserlaser eine Pumplasereinheit 16a auf, die aus einer Mehrzahl von einzelnen fasergekoppelten Pumplasern, gespeist aus Pumpquellenlaserdioden, aufgebaut ist. In Figur 3 exemplarisch dargestellt weisen die einzelnen Pumplaser jeweils 250 W Laserleistung auf und werden exemplarisch mit 50 Stück angegeben. Diese einzelnen Laserleistungen werden in einem Strahlkoppler 20 zusammengeführt und ebenfalls über eine optische Faser 18 dem Ausgangsstufenelement 8 zugeführt. Die Seedlasereinheit 14 weist hierbei exemplarisch eine Leistung von 1 kW auf, während die Gesamtheit der Pumplasereinheiten 16a 12,5 kW aufweisen.

Im Weiteren kann noch eine Faserverstärkereinheit 16b vorgesehen sein, welche in Figur 3 jedoch nicht explizit dargestellt ist. Diese kann beispielsweise auch in dem Ausgangsstufenelement 8 angeordnet sein und von beiden optischen Faserelementen 18 gespeist werden. Das Ausgangsstufenelement 8 weist in Figur 3 exemplarisch eine Ausgangsleistung von 10 kW auf und mag somit nicht als Verstärkerelement im herkömmlichen Sinne betrachtet werden. Beispielsweise ermöglicht das Ausgangsstufenelement 8 in Figur 3 eine Vergütung des Ausgangsstrahls, somit zum Beispiel eine Kompensation bzw. Verbesserung der Modemqualität, der Spektraldivergenz oder spektralen und/oder zeitabhängigen Eigenschaften des Ausgangsstrahls. Der Ausgangsstrahl, aus dem Ausgangsstufenelement 8 kommend, wird über eine optische Faser 9 oder einen optischen Freistrahl 9 an das Strahloptikelement 10 weitergeleitet, welches nachfolgend für die Aussendung des Wirkstrahls 22 verantwortlich ist.

Erfindungswesentlich ist hierbei die Anordnung bzw. die Verbindung von Seedlasereinheit 14 und Pumplasereinheiten 16a an das Ausgangsstufenelement 8 unter Verwendung der optischen Fasern 18 zwischen dem bodenfesten/teilbeweglichen Anteil sowie dem vollbeweglichen Anteil des Laserwaffensystems 2.

Weiter Bezug nehmend auf Figur 4 wird eine exemplarische Ausgestaltung eines Faserlasers gemäß der vorliegenden Erfindung dargestellt.

Figur 4 zeigt den schematischen Aufbau der Wirkstrahlerzeugung einer erfindungsgemäßen Strahlrichteinheit 4. Eine Seedlasereinheit 14, welche im Wesentlichen aus dem Stand der Technik bekannt ist, weist in Figur 4 exemplarisch zwei Pumplaserdioden Pump LDs auf und erzeugt mit der aktiven Faser bzw. dem Master Oszillator einen Laserstrahl mit der Eingangsleistung für den nachgeschalteten Faserverstärker bzw. eine optisch gepumpte Faser 16b. Vor und nach der aktiven Faser der Seedlasereinheit 14 angeordnet sind Faser-Bragg-Gitter FBG HR, FBG OC als wellenlängenselektiver Faserreflektor der fasergekoppelten Pumplaserdioden.

Seedlasereinheit 14 weist exemplarisch eine Leistung von 1 kW auf und ist unter Verwendung einer optischen Faser 18a an das Ausgangsstufenelement 8 angekoppelt. Pumplasereinheiten 16a sind unter Verwendung von optischen Fasern 18b an eine Strahlkopplereinheit 20 angebunden, die wiederum mit optischer Faser 18c an dem Ausgangsstufenelement 8 angebunden ist. Die Strahlkopplereinheit 20 kann hierbei Teil des Ausgangsstufenelementes 8 sein, oder alternativ zumindest am vollbeweglichen Anteil 12b angeordnet sein. Somit können entweder die optischen Fasern 18a,b oder 18a,c den Übergang zwischen dem stationären/teilbeweglichen Anteil 12a und dem vollbeweglichen Anteil 12b bereitstellen.

Figur 4 zeigt verschiedene Einkoppelpunkte 11 der Pumplasereinheiten 16a bzw. der Strahlkopplereinheit 20 in das Ausgangsstufenelement 8, insbesondere vor und nach der Faserverstärkereinheit 16b.

Der Wirkstrahl in der optischen Faser 18 innerhalb des Ausgangsstufenelementes 8 wird nun unter Verwendung einer optischen Faser 9 oder eines optischen Freistrahls 9 an ein Strahloptikelement 10 weitergegeben, welches den Wirkstrahl 22 gerichtet bzw. gezielt abgeben mag, insbesondere in einem Halbraum, abhängig von der Ausgestaltung des vollbeweglichen Anteils der Strahlrichteinheit 4. Der Wirkstrahl 22 kann somit auf ein Ziel ausgerichtet werden und dort eine geforderte bzw. gewünschte Wirkung erzielen.

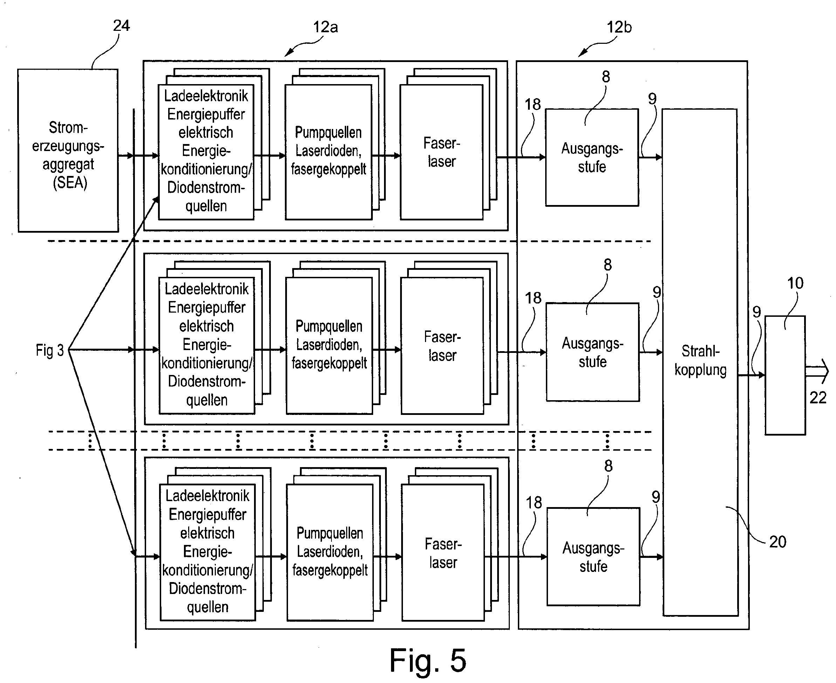

Weiter Bezug nehmend auf Figur 5 wird eine weitere exemplarische Ausgestaltung eines Laserwaffensystems gemäß der vorliegenden Erfindung dargestellt.

Figur 5 besteht hierbei im Wesentlichen aus einer Mehrzahl von exemplarischen Ausgestaltungen eines erfindungsgemäßen Laserwaffensystems gemäß Figur 3. Diese sind an eine gemeinsame Stromversorgung 24 angeschlossen, stellen jedoch ansonsten eigenständige Einheiten dar. Die einzelnen Lasererzeugungseinheiten sind wiederum unter Verwendung von optischen Fasern 18 an einzelne Ausgangsstufenelemente 8 angebunden. Diese Gesamtheit der Ausgangsstufenelemente 8 ist dabei auf dem vollbeweglichen Anteil 12b angeordnet. Jedes der Ausgangsstufenelemente 8 ist unter Verwendung einer optischen Faser 9 oder eines optischen Freistrahls 9 an eine (weitere) Strahlkoppeleinheit 20 angebunden. In der Strahlkoppeleinheit 20 werden nun die einzelnen Strahlanteile der einzelnen Ausgangsstufenelemente 8 kombiniert und über eine optische Faser 9 oder einen weiteren optischen Freistrahl 9 an das Strahloptikelement 10 zur Aussendung des Wirkstrahls 22 weitergeleitet. Eine Ausgestaltung der Figur 5 stellt hierbei insbesondere ein skalierbares System dar, da eine gewünschte bzw. geforderte Ausgangsleistung durch entsprechende Anpassung der Anzahl der Einzelmodule gemäß Figur 3 realisiert werden kann.

Ergänzend sei darauf hingewiesen, dass "aufweisend" oder "umfassend" keine anderen Elemente oder Schritte ausschließt und dass "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Laserwaffensystem
- 4: Strahlrichteinheit
- 6: Lasererzeugungseinheit
- 8: Ausgangsstufenelement
- 9: optische Faser / optischer Freistrahl
- 10: Strahloptikelement
- 12a: stationärer/teilbeweglicher Anteil
- 12b: vollbeweglicher Anteil
- 14: Seedlasereinheit
- 16a: Pumplasereinheit
- 16b: Faserverstärkereinheit
- 18a,b,c: optische Faser
- 20: Strahlkopplereinheit
- 22: Wirkstrahl
- 24: Energieversorgung

## Patentansprüche

1. Strahlrichteinheit (4) für ein Laserwaffensystem (2), aufweisend
zumindest eine Lasererzeugungseinheit (6);
zumindest ein Ausgangsstufenelement (8); und
ein Strahloptikelement (10);
wobei die Strahlrichteinheit einen stationären/teilbeweglichen Anteil (12a) und vollbeweglichen Anteil (12b) aufweist;
wobei der stationäre/teilbewegliche Anteil (12a) zur Aufstellung der Strahlrichteinheit (4) bzw. zum Transport der Strahlrichteinheit (4) zwischen Einsätzen ausgebildet ist;
wobei der vollbewegliche Anteil zur Zielerfassung bzw. Zielnachführung des Laserwaffensystems (2) eingerichtet ist;
wobei das Strahloptikelement (10) und das zumindest eine Ausgangsstufenelement (8) am vollbeweglichen Anteil angeordnet sind,
**dadurch gekennzeichnet, dass** das Ausgangsstufenelement (8) eine Faserverstärkereinheit (16b) aufweist;
wobei eine Seedlasereinheit (14) und zumindest eine Pumplasereinheit (16a) unter Verwendung zumindest einer optischen Faser (18) an das Ausgangsstufenelement (8) angebunden ist, wobei die Faserverstärkereinheit (16b) ausgeführt ist, von der zumindest einen optischen Faser (18) gespeist zu werden.

2. Strahlrichteinheit gemäß Anspruch 1, wobei das zumindest eine Ausgangsstufenelement (8) eingerichtet ist zumindest eine Funktion bereitzustellen aus der Gruppe bestehend aus Verstärkung der optischen Ausgangsleistung, Vergütung des Ausgangsstrahls, Kompensation bzw. Verbesserung von Modenqualität, Strahldivergenz, spektralen und/oder zeitabhängigen Eigenschaften des Ausgangsstrahls.

3. Strahlrichteinheit gemäß einem der vorhergehenden Ansprüche, wobei die Lasererzeugungseinheit (6) als Faserlaser ausgebildet ist.

4. Strahlrichteinheit gemäß einem der vorhergehenden Ansprüche, wobei die Lasererzeugungseinheit (6) aufweist
zumindest eine Seedlasereinheit (14);
zumindest eine Pumplasereinheit (16a); und/oder
zumindest eine Faserverstärkereinheit (16b);
wobei die Lasererzeugungseinheit (6) unter Verwendung einer optischen Faser (18) an das Ausgangsstufenelement (8) angebunden ist.

5. Strahlrichteinheit gemäß einem der vorhergehenden Ansprüche, aufweisend eine Mehrzahl von Pumplasereinheiten (16a);
wobei die Mehrzahl von Pumplasereinheiten (16a) an eine Strahlkopplereinheit (20) angeschlossen sind; und
wobei die Strahlkopplereinheit (20) an das Ausgangsstufenelement (8) angeschlossen ist.

6. Strahlrichteinheit gemäß einem der vorhergehenden Ansprüche 1 bis 4, aufweisend
eine Mehrzahl von Pumplasereinheiten (16a);
wobei die Mehrzahl von Pumplasereinheiten (16a) an das Ausgangsstufenelement (8) angeschlossen ist.
wobei die das Ausgangsstufenelement (8) eine Strahlkopplereinheit (20) aufweist.

7. Strahlrichteinheit gemäß einem der vorhergehenden Ansprüche,
wobei die Strahlrichteinheit eingerichtet ist einen Wirkstrahl (22) im Wesentlichen in einem Halbraum auszurichten; und /oder
wobei die dynamischen Eigenschaften des vollbeweglichen Anteils der Zielerfassung bzw. Zielnachführung des Strahloptikelementes (10) des Laserwaffensystems aufweisen
eine Richtgeschwindigkeit > 0,1 rad/s, insbesondere > 0,5 rad/s, weiter insbesondere > 1 rad/s, weiter insbesondere > 1,5 rad/s, weiter insbesondere 2 rad/s; und/oder
eine Richtbeschleunigung > 0,1 rad/s², insbesondere > 0,5 rad/s², weiter insbesondere > 1 rad/s², weiter insbesondere > 1,5 rad/s², weiter insbesondere 2 rad/s²; und/oder
eine Richtgenauigkeit < 20 µrad, insbesondere < 15 µrad, weiter insbesondere < 10 µrad, weiter insbesondere < 5 µrad, weiter insbesondere < 2 µrad.

8. Strahlrichteinheit gemäß einem der vorhergehenden Ansprüche, wobei die Anbindung zwischen Ausgangsstufenelement (8) und Strahloptikelement (10) unter Verwendung einer optischen Faser (9) oder eines optischen Freistrahls (9) erfolgt, wobei die Länge der optischen Faser oder des optischen Freistrahls < 2,5m, insbesondere < 2m, weiter insbesondere < 1,5m, weiter insbesondere <1m, weiter insbesondere <0,5m erfolgt.

9. Laserwaffensystem (2) aufweisend zumindest eine Strahlrichteinheit gemäß einem der vorhergehenden Ansprüche.

## Claims

1. A beam focusing unit (4) for a laser weapon system (2), comprising:
a laser generating unit (6);
at least one output element (8); and
a beam optics element (10);
wherein the beam focusing unit (4) comprises a fully movable part (12b) and a stationary or partly movable part (12a);
wherein the stationary or partly movable part (12a) is configured to position the beam focusing unit (4) or to transport the beam focusing unit (4) between operations;
wherein the fully movable part (12b) is configured to target or follow targets for the laser weapon system (2);
wherein the beam optics element (10) and the at least one output element (8) are arranged on the fully movable part (12b)
**characterized in that**, wherein the at least one output element (8) comprises a fiber amplifier unit (16b),
wherein a seed laser unit (14) and at least one pump laser unit (16a) are connected to the at least one output element (8) by using at least one optical fiber (18),
wherein the fiber amplifier unit (16b) is configured to be supplied by the at least one optical fiber (18).

2. The beam focusing unit according to claim 1, wherein the at least one output element (8) is configured to provide at least one function from the group consisting of amplifying optical output power, improving an output beam, compensation or improvement of mode quality, beam divergence, spectral properties of the output beam or time-dependent properties of the output beam.

3. The beam focusing unit according to one of the preceding claims, wherein the laser generating unit (6) is a fiber laser.

4. The beam focusing unit according to one of the preceding claims, wherein the laser generating unit (6) comprises:
at least one seed laser unit (14);
at least one pump laser unit (16a); and/or
at least one fiber amplifier unit (16b);
wherein the laser generating unit (6) is connected to the output element (8) by an optical fiber (18).

5. The beam focusing unit according to one of the preceding claims, comprising:
a plurality of pump laser units (16a),
wherein the plurality of pump laser units (16a) is connected to a beam coupler unit (20), and
wherein the beam coupler unit (20) is connected to the at least one output element (8).

6. The beam focusing unit according to one of claims 1 to 4, comprising
a plurality of pump laser units (16a),
wherein the plurality of pump laser units (16a) is connected to the output element (8),
wherein the output element (8) comprises a beam coupler unit (20).

7. The beam focusing unit according to one of the preceding claims, wherein
the beam focusing unit is configured to focus an active beam (22) substantially within a half-space; or
dynamic properties of the fully movable part for targeting and target-following of the beam optics element (10) of the laser weapon system comprise
a focusing speed > 0,1 rad/s, particularly > 0,5 rad/s, further particularly > 1 rad/s, further particularly > 1,5 rad/s, further particularly > 2 rad/s; and/or
a focusing acceleration > 0.1 rad/s², particularly > 0,5 rad/s², further particularly > 1 rad/s², further particularly > 1,5 rad/s², further particularly > 2 rad/s²; and/or
a focusing accuracy < 20 µrad, particularly < 15 µrad, further particularly < 10 µrad, further particularly < 5 µrad, further particularly < 2 µrad.

8. The beam focusing unit according to one of the preceding claims, wherein an optical fiber (9) or an optical free beam (9) couples the at least one output element (8) and the beam optics element (10), wherein a length of the optical fiber or the optical free beam is < 2,5 m, particularly < 2 m, further particularly < 1,5 m, further particularly < 1 m, further particularly < 0,5 m.

9. Laser weapon system (2) comprising at least one beam focusing unit according to one of the preceding claims.

## Revendications

1. Unité de pointage de rayonnement (4) pour un système d'arme laser (2), présentant
au moins une unité de production laser (6);
au moins un élément d'étage de sortie (8); et
un élément optique de rayonnement (10) ;
l'unité de pointage de rayonnement présentant une fraction (12a) stationnaire/partiellement mobile et une fraction (12b) totalement mobile ;
la fraction (12a) stationnaire/partiellement mobile étant constituée pour l'installation de l'unité de pointage de rayonnement (4) ou respectivement pour le transport de l'unité de pointage de rayonnement (4) entre des utilisations ;
la fraction totalement mobile étant aménagée pour la détection de la cible ou respectivement pour la poursuite de la cible du système d'arme laser (2) ;
l'élément optique de rayonnement (10) et l'élément d'étage de sortie (8) au moins au nombre de un étant disposés sur la fraction totalement mobile,
**caractérisée en ce que** l'élément d'étage de sortie (8) présente une unité d'amplification à fibre (16b);
une unité de laser d'ensemencement (14) et au moins une unité de laser de pompage (16a) étant reliées à l'élément d'étage de sortie (8) avec utilisation d'au moins une fibre optique (18), l'unité d'amplification à fibre (16b) étant réalisée pour être alimentée par la fibre optique (18) au moins au nombre de un.

2. Unité de pointage de rayonnement selon la revendication 1, l'élément d'étage de sortie (8) au moins au nombre de un étant aménagé pour fournir au moins une fonction parmi le groupe composé de l'amplification de la puissance de sortie optique, du traitement du rayon de sortie, de la compensation ou respectivement de l'amélioration de la qualité du mode, de la divergence du rayonnement, des caractéristiques spectrales et/ou dépendantes du temps du rayon de sortie.

3. Unité de pointage de rayonnement selon l'une des revendications précédentes, l'unité de production laser (6) étant constituée en tant que laser à fibre.

4. Unité de pointage de rayonnement selon l'une des revendications précédentes, l'unité de production laser (6) présentant
au moins une unité de laser d'ensemencement (14);
au moins une unité de laser de pompage (16a) ; et/ou
au moins une unité d'amplification à fibre (16b) ;
l'unité de production laser (6) étant reliée à l'élément d'étage de sortie (8) avec utilisation d'une fibre optique (18).

5. Unité de pointage de rayonnement selon l'une des revendications précédentes, présentant
une pluralité d'unités de laser de pompage (16a);
la pluralité d'unités de laser de pompage (16a) étant connectées à une unité de coupleur de rayonnement (20) ; et
l'unité de coupleur de rayonnement (20) étant connectée à l'élément d'étage de sortie (8).

6. Unité de pointage de rayonnement selon l'une des revendications précédentes 1 à 4, présentant
une pluralité d'unités de laser de pompage (16a);
la pluralité d'unités de laser de pompage (16a) étant connectée à l'élément d'étage de sortie (8),
l'élément d'étage de sortie (8) présentant une unité de coupleur de rayonnement (20).

7. Unité de pointage de rayonnement selon l'une des revendications précédentes, l'unité de pointage de rayonnement étant aménagée pour orienter un rayonnement actif (22) essentiellement dans un demi-espace ; et/ou
les caractéristiques dynamiques de la fraction totalement mobile de la détection de la cible ou respectivement de la poursuite de la cible de l'élément optique de rayonnement (10) du système d'arme laser présentant
une vitesse de pointage > 0,1 rad/s, en particulier > 0,5 rad/s, également en particulier > 1 rad/s, également en particulier > 1,5 rad/s, également en particulier 2 rad/s ; et/ou
une accélération de pointage > 0,1 rad/s², en particulier > 0,5 rad/s², également en particulier > 1 rad/s², également en particulier > 1,5 rad/s², également en particulier 2 rad/s² ; et/ou
une précision de pointage < 20 µrad, en particulier < 15 µrad, également en particulier < 10 µrad, également en particulier < 5 µrad, également en particulier < 2 µrad.

8. Unité de pointage de rayonnement selon l'une des revendications précédentes, la liaison entre l'élément d'étage de sortie (8) et l'élément optique de rayonnement (10) s'effectuant en utilisant une fibre optique (9) ou un rayonnement libre (9) optique, la longueur de la fibre optique ou du rayonnement libre optique < 2,5 m, en particulier < 2 m, également en particulier < 1,5 m, également en particulier < 1 m, également en particulier < 0,5 m.

9. Système d'arme laser (2),
présentant au moins une unité de pointage de rayonnement selon l'une des revendications précédentes.
